**Europäisches Patentamt**

**European Patent Office**

**Office européen des brevets**

(19)

(11) Veröffentlichungsnummer : **0 519 863 A1**

## (12) EUROPÄISCHE PATENTANMELDUNG

(21) Anmeldenummer : **92810355.5**

(22) Anmeldetag : **12.05.92**

(51) Int. Cl.[5] : **C09K 3/10,** C09K 21/02, C08K 3/04

(30) Priorität : **21.06.91 DE 4120561**

(43) Veröffentlichungstag der Anmeldung : **23.12.92 Patentblatt 92/52**

(84) Benannte Vertragsstaaten :
**AT CH DE DK ES FR GB IT LI SE**

(71) Anmelder : **HILTI Aktiengesellschaft**
**FL-9494 Schaan (LI)**

(72) Erfinder : **Jonas, Reinhard**
**Rosenweg 3**
**W-6270 Idstein/Wörsdorf (DE)**
Erfinder : **Muenzenberger, Herbert**
**Schultheiss-Strasse**
**W-6200 Wiesbaden/Bierstadt (DE)**

(74) Vertreter : **Wildi, Roland**
**Hilti Aktiengesellschaft Patentabteilung**
**FL-9494 Schaan (LI)**

(54) **Haft-, Dicht- und Klebemasse auf Silikonbasis.**

(57)    Eine schäumbare, härtbare Masse auf Silikonbasis weist bei höheren Temperaturen expandierende Bestandteile auf, welche nicht oder allenfalls schwer brennbar sind. Dadurch eignet sich diese Masse als Brandschutz, da die Brandtemperatur zu einem Expandieren dieser Bestandteile führt. Die Masse kann damit zum Abdichten oder Abdecken brandgefährdeter Objekte dienen oder als fertiger Formkörper zum Einsatz kommen.

EP 0 519 863 A1

Härtbare Massen auf Silikonbasis werden in grossem Umfang für Dichtzwecke sowie für Haft- und Klebezwecke eingesetzt. Dank ihres Anteils an anorganischen Bestandteilen kommt ihnen eine gewisse brandhemmende Wirkung zu, die durch Zugabe bekannter brandhemmender Stoffe verbessert werden kann.

Gegenstand der vorliegenden Erfindung sind nun solche Haft-, Dicht- und Klebemassen auf Silikonbasis, welche als Silikonbestandteil ein-, zwei- oder mehrkomponentige verschäumbare Silikone und zudem bei Brandtemperaturen expandierende, nicht- oder schwer brennbare Bestandteile enthalten.

Zum Verbinden von Teilen oder zum Abdichten, wie beispielsweise von Leitungsdurchbrüchen, von Tür- und Fensterrahmen gegenüber dem Mauerwerk, von Mauerspalten und dgl. ist es bekannt, verschäumbare Silikonmassen einzusetzen. Gegenüber anderen Schäumen, wie beispielsweise Polyurethanschäumen, die im Brandfalle brennen bzw. "schmelzen", haben die Silikonschäume den Vorteil einer höheren Standfestigkeit. Zudem setzen Silikonschäume im Brandfall keine toxischen Gase frei. Jedoch ist das Brandverhalten keineswegs befriedigend. Schon bald nach Ausbruch eines Brandes zeigen sich auf der dem Feuer zugewandten Oberfläche Risse in der "verkohlenden" Schicht, die bald tiefer gehen und schliesslich den Feuerdurchtritt ermöglichen. Damit ist der Versuch der Ausweitung des Brandes entgegenzuwirken gescheitert.

Der vorliegenden Erfindung liegt die Aufgabe zugrunde, Haft-, Dicht- und Klebemassen auf Silikonbasis zur Verfügung zu stellen, welche auch im Brandfalle befriedigende Eigenschaften aufweisen.

Die Lösung dieser Aufgabe gelingt auf die aus dem Patentanspruch 1 ersichtliche Weise.

Als Silikonbestandteile der Ein- oder Mehrkomponentensysteme haben sich insbesondere Organopolysiloxane, die durch Bläh-, Verschäum- oder Treibmittel verschäumt werden können, bewährt. Bevorzugt sind insbesondere solche Siloxane, welche elastomere Schäume bilden, jedoch sind auch hartschaumbildende Siloxane verwertbar. Beispiele für im Sinne der vorliegenden Erfindung brauchbare verschäumbare Silikone sind zB:

- Mischungen aus OH- und H-funktionellen Polysiloxanen und/oder Silanen, die bei der Reaktion (Vernetzung) Wasserstoff freisetzen, welcher als Treibgas die Masse aufschäumt;

- Mischungen aus vinyl- oder auch hexenyl- und H-funktionellen Polysiloxanen und/oder Silanen, denen OH-haltige Substanzen zB Alkohole zugesetzt werden. Dabei vernetzen die vinyl-/hexenyl- und die H-funktionellen Bestandteile in einer Polyadditionsreaktion, während die H- und OH-funktionellen Bestandteile den zum Aufschäumen nötigen Wasserstoff bilden;

- oben genamte Mischungen, die statt üblicherweise mit Platin- mit den weit weniger inhibierungssensitiven Rhodiumkomplexen katalysiert sind;

- oben genannte Mischungen, die durch MQ-Silikonharze auf spezielle Härten eingestellt wurden.

Weitere Einzelheiten über die verwendbaren Verbindungen können aus Noll, Technologie der Silikone, Verlag Chemie, 1960 und Silikone Chemie und Technologie, Vulkan Verlag, 1989 entnommen werden. Geeignete Treibmittel sind Gase wie Wasserstoff, Kohlendioxid, Stickstoff und dgl. oder Verbindungen, welche sich unter Bildung von Treib- bzw. Blähmitteln zersetzen oder welche beim Vermischen mit den Silikonen Treib- bzw. Blähmittel bilden. Hierzu gehören zB. Azoverbindungen wie Azodicarbonamid, sich bildender Wasserstoff bei der Reaktion von Si-H-funktionellen Silanen und/oder Siloxanen mit OH-haltigen Substanzen wie Alkoholen oder Polyolen. Auch kann das Aufschäumen durch in die Silikonmassen eingerührten niedrigsiedenden Kohlenwasserstoffen wie zB Isoparaffinen oder unter Druck eingerührten inerten Gasen wie zB Stickstoff hervorgerufen werden. Diese Zusätze verdampfen/entweichen dann beim Aushärten und verschäumen die Masse dabei. Auf diese Weise lassen sich auch übliche feuchtigkeitshärtende Einkomponentenmassen aufschäumen. Auch lässt sich der Aufschäumeffekt der beschriebenen wasserstoffverschäumbaren Massen noch einmal steigern. Diese Wasserstoff aufgetriebenen zweikomponentigen Massen lassen sich auch einkomponentig herstellen, wenn der für deren Reaktion nötige Katalysator bei üblichen Lagerbedingungen inhibiert wird, zB durch Verkapselung.

Als nicht- oder schwer brennbare Stoffe, die bei Brandtemperatur expandieren kommen organische und-/oder anorganische Verbindungen in Betracht. Hierzu gehören insbesondere Blähgraphite, Vermikulite, blähbare Alkalisilikate, Phosphate wie zB. Ammoniumphosphate, Polyphosphate, Phosphonate, kristallwasserhaltige Stoffe wie Aluminiumhydroxide und Carbonate, insbesondere Calciumcarbonate.

Der Gehalt an bei Brandtemperaturen expandierenden Stoffen liegt im allgemeinen zwischen 1 - 60 Gew.-% bezogen auf das Gesamtgewicht der Masse. Massen, deren Gewichtsanteile an expandierenden Stoffen im Bereich von 5 - 40 %, insbesondere von 8 - 35 % liegen, sind bevorzugt. Die bei Brandtemperaturen expandierenden Stoffe liegen vorzugsweise in feinteiliger Form, mit Durchschnittsteilchen im Bereich von 0,01 - 3 mm, insbesondere im Bereich von 0,1 - 1 mm vor. Ueber die Menge und Teilchengrösse der bei Brandtemperaturen expandierenden Stoffe kann gleichzeitig die Viskosität der Masse gesteuert werden, ein Vorteil, der für das Auftragen der Masse auf Wänden oder über Kopf von besonderer Bedeutung ist.

Die erfindungsgemässen Massen können Zusätze wie Füllmittel, zB in Kugel-, Hohlkugel-, Blättchen- oder Faserform, viskositätsbeeinflussende Mittel, zB pyrogene Kieselsäure, Flugasche, Farbstoffe, Lösungsmittel und dgl. enthalten.

Die erfindungsgemässen Massen können als Ein-, Zwei- oder Mehrkomponenten konfektioniert werden. Bei Zwei- oder Mehr- komponentensystemen tritt die Verschäumung regelmässig durch Vermischen der Komponenten ein. Bei Einkomponentensystemen wird im allgemeinen ein Verschäumungsmittel zugeführt.

Die nachfolgenden Beispiele dienen der Erläuterung der Erfindung.

Beispiel 1

Angaben in Gewichts-%:

Teil A

```
Rhodorsil RTV 1593 A  1)          80 %
Pyrogene Kieselsäure  2)           5 %
Blähgraphit  3)                   10 %
Natürliche Kreide  4)              5 %
```

Teil B

```
Rhodorsil RTV 1593 B  1)      80 %
Pyrogene Kieselsäure  2)       6 %
Blähgraphit  3)               10 %
Natürliche Kreide  4)          4 %
```

```
1)    Silikonschaum der Fa. Rhone Poulenc
      (Konsistenz: dünnflüssig)
2)    Methylpolysiloxan gecoatet, zB Aerosil R 202 (Degussa)
3)    Sigraflex FR 90-60/80 der Fa. Sigri
4)    Carborex 10 der Fa. Omya
```

Herstellung:

In einem Vakuumplanetenmischer (Drais) werden die Füllstoffe nacheinander in der Reihenfolge Kreide/Blähgraphit/Kieselsäure in das flüssige Silikon (Rhodorsil) eingerührt. Dies geschieht in zwei Rühransätzen jeweils für Teil A und B getrennt. Nach Glattrühren und Evakuieren wird in Zweikomponenten-Koaxialkartuschen abgepackt.

Anwendung:

Die Masse wird aus Zweikomponenten-Koaxialkartuschen über einen Statikmischer in Fugen und Löcher gepresst. Dies geschieht mit entsprechenden Auspresspistolen.

Mischungsverhältnis Teil A/Teil B = 1:1

Beispiel 2

Ein Silikonschaum wie er in Beispiel 1 als Basismaterial verwendet ist, kann wie folgt hergestellt werden: Angaben in Gewichts-%:

Teil A:

| | |
|---|---|
| $\alpha$ -$\omega$-Dihydroxypolydimethylsiloxan | 99,9 % |
| organischer Platinkomplex | 0,1 % |

Teil B

| | |
|---|---|
| $\alpha$ -$\omega$-Dihydroxypolydimethylsiloxan | 80 % |
| Si-H-funktionelles Polydimethylsiloxan | 20 % |

Als hydroxyfunktionelles Polysiloxan kann ein Polymer mit einer Viskosität von ca. 5000 cp eingesetzt werden, als Si-H-funktionelles Polysiloxan ein fünffunktionelles Siloxan mit acht Si-O-Einheiten.

**Patentansprüche**

1. Haft-, Dicht- und Klebemasse auf Silikonbasis, **gekennzeichnet durch** einen Gehalt an verschäumbaren Silikonen und an bei Brandtemperaturen expandierenden nicht- oder schwer brennbaren Stoffen.

2. Masse nach Anspruch 1, dadurch gekennzeichnet, dass als verschäumbare Silikone Organopolysiloxane enthalten sind.

3. Masse nach Anspruch 1 oder 2, dadurch gekennzeichnet, dass die bei Brandtemperaturen expandierenden Stoffe in feinteiliger Form enthalten sind.

4. Masse nach einem der Ansprüche 1 bis 3, dadurch gekennzeichnet, dass die bei Brandtemperatur expandierenden Stoffe mineralische Stoffe, insbesondere mit Schichtgitterstruktur sind.

5. Masse nach einem der Ansprüche 1 bis 4, dadurch gekennzeichnet, dass die bei Brandtemperatur expandierenden Stoffe Blähgraphit- und/oder Vermikulite sind.

6. Masse nach einem der Ansprüche 1 bis 5, dadurch gekennzeichnet, dass die bei Brandtemperatur expandierenden Stoffe in einer Menge von 1 bis 60, insbesondere 8 bis 35 Gew.-% enthalten sind.

7. Formkörper auf Silikonbasis, insbesondere nach einem der Ansprüche 1 bis 6, gekennzeichnet durch Silikonschäume enthaltend bei Brandtemperatur expandierende, nicht- oder schwer-brennbare Stoffe.

8. Formkörper nach Anspruch 7, gekennzeichnet durch elastomeren Silikonschaum.

Europäisches
Patentamt

**EUROPÄISCHER RECHERCHENBERICHT**

Nummer der Anmeldung

EP    92 81 0355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 453 912 (DOW CORNING)<br>* Zusammenfassung; Ansprüche 1,4,5 *<br>* Spalte 3, Zeile 6 - Zeile 20 *<br>--- | 1-5 | C09K3/10<br>C09K21/02<br>C08K3/04 |
| X | EP-A-0 040 750 (WCKER CHEMIE GMBH)<br>* Seite 7, Zeile 10 - Zeile 11; Anspruch 1;<br>Beispiel 1 *<br>* Zusammenfassung *<br>--- | 1-5 | |
| X | EP-A-0 243 576 (BAYER AG)<br>* Seite 3, Zeile 1 - Zeile 16; Ansprüche 1,2;<br>Beispiel 3 *<br>* Zusammenfassung *<br>--- | 1-5 | |
| A | EP-A-0 035 417 (ISOLATION THERMIQUE DU NORD)<br>* Seite 2, Zeile 8 - Zeile 32; Ansprüche 1,2 *<br>* Zusammenfassung *<br>--- | 1-8 | |
| A | PATENT ABSTRACTS OF JAPAN<br>27. Juli 1988<br>& JP-A-63 051 495 ( SHIN ETSU CHEM ) 4. März<br>1988<br>* Zusammenfassung *<br>--- | 1-8 | **RECHERCHIERTE SACHGEBIETE (Int. Cl.5)** |
| P,A | EP-A-0 456 557 (SHIN ETSU CHEMICAL CO)<br>* Zusammenfassung; Ansprüche 1,5 *<br><br>----- | 1-8 | C09K<br>C08K |

Der vorliegende Recherchenbericht wurde für alle Patentansprüche erstellt

| Recherchenort | Abschlußdatum der Recherche | Prüfer |
|---|---|---|
| DEN HAAG | 25 AUGUST 1992 | NICOLAS H.J.F. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes
    Dokument

EPO FORM 1503 03.82 (P0403)